# EUROPÄISCHE PATENTANMELDUNG

(11) **EP 1 449 711 A2**
(43) Veröffentlichungstag der Anmeldung: **25.08.2004**
(21) Anmeldenummer: 04100620.6
(22) Anmeldetag: 17.02.2004
(51) Int. Cl.: B60N 2/30

(54) **Klappbarer Fahrzeugsitz**

(30) Priorität: 20.02.2003 DE 10307149
(71) Anmelder: DEERE & COMPANY, Moline, Illinois 61265-8098 (US)
(72) Erfinder: Teich, Michael, 68199 Mannheim (DE)
(74) Vertreter: Holst, Sönke, Dr.

(57) **Zusammenfassung**

Es wird ein Fahrzeugsitz, insbesondere ein Beifahrerklappsitz für landwirtschaftlich oder industriell nutzbare Fahrzeuge beschrieben, der ein Sitzteil (10) enthält, welches aus einer Sitzstellung in eine hochgeklappte Stellung verschwenkbar ist.

Um einen einfachen, leicht bedienbaren Fahrzeugsitz bereitzustellen, der in hochgeklappter Stellung wenig Raum in Anspruch nimmt, und der bei einfachem Aufbau stabil gelagert ist, wird vorgeschlagen, dass im hinteren Bereich des Sitzteils (10) eine Gleitlagervorrichtung (72) vorgesehen ist, welche einerseits in einer am Fahrzeugstand montierbaren Führung (24) translatorisch verschiebbar geführt und andererseits um eine Achse (76) der Gleitlagervorrichtung (72) verschwenkbar gelagert ist. Beim Hochklappen des Sitzteils (10) gleitet die Gleitlagervorrichtung (72) aus einer oberen Position entlang der Führung (24) nach unten und verdreht sich gleichzeitig relativ zur Führung (24).

## Beschreibung

Die Erfindung betrifft einen Fahrzeugsitz, insbesondere Beifahrerklappsitz für landwirtschaftlich oder industriell nutzbare Fahrzeuge, mit einem Sitzteil, welches aus einer Sitzstellung in eine hochgeklappte Stellung verschwenkbar ist.

In der DE-A-22 27 659 wird ein Beifahrerklappsitz mit Fußstütze für landwirtschaftliche Fahrzeuge beschrieben. Die Sitzfläche besteht aus vier in einem Rechteck angeordneten Holmen, die mit einem Stoff überspannt sind und einen Sitzrahmen bilden. Ein hinterer Holm des Sitzrahmens ist in einem am Fahrzeugkotflügel befestigten Schwenklager gelagert, so dass der Sitzrahmen um eine horizontale Achse nach oben auf eine Kotflügelschale weggeschwenkt werden kann. Es handelt sich hierbei um einen sehr einfachen, wenig komfortablen Beifahrersitz ohne Polsterung und Rückenlehne, der vor allem für Kinder vorgesehen zu sein scheint.

Die DE 21 59 689 C3 beschreibt einen in eine Nichtgebrauchslage wegschwenkbaren Beifahrersitz für Schlepper, Traktoren, Baumaschinen und dergleichen, der aus einem mehrteiligen mit Scharnieren verbundenen Gestänge besteht, welches durch kettenartige Verbindungen bzw. Schlaufen in Gebrauchs- und Nichtgebrauchslage gehalten werden soll. Diese Konstruktion besitzt die Möglichkeit, durch Umhängen der Verbindungsketten die Benutzungsrichtung des Beifahrersitzes zu ändern. Ansonsten genügt die Konstruktion jedoch den heute bestehenden Sicherheitsanforderungen nicht, da die Verbindungsketten weder eine Arretierung noch eine genaue Fixierung der Sitzlage ermöglichen.

Die der Erfindung zugrunde liegende Aufgabe wird darin gesehen, einen Fahrzeugsitz der eingangs genannten Art anzugeben, durch welchen die genannten Probleme überwunden werden. Insbesondere soll ein bequemer, klappbarer Fahrzeugsitz bereitgestellt werden, der bei einfachem Aufbau und leichter Bedienbarkeit in seiner hochgeklappten Nichtgebrauchsstellung wenig Raum in Anspruch nimmt, so dass ein ungehinderter Zugang zum Fahrersitz des Fahrzeugs gewährleistet ist. Der Fahrzeugsitz soll sowohl in seiner Sitzstellung als auch in seiner Nichtgebrauchstellung stabil gelagert sein und den Sicherheitsanforderungen genügen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist bei dem eingangs genannten Fahrzeugsitz im hinteren Bereich des Sitzteils eine Gleitlagervorrichtung vorgesehen, welche einerseits in einer am Fahrzeugstand montierbaren Führung translatorisch verschiebbar geführt und andererseits um eine Achse der Gleitlagervorrichtung verschwenkbar gelagert ist. Damit wird das Sitzteil beim Hochklappen aus seiner Sitzposition in seine Nichtgebrauchsstellung nicht lediglich um eine Achse verschwenkt. Vielmehr ist der Schwenkbewegung eine translatorische Bewegung überlagert, so dass die Gleitlagervorrichtung aus einer oberen Position entlang der Führung in eine untere Position gleitet und sich gleichzeitig relativ zur Führung verdreht.

Vorzugsweise ist ein am Fahrzeugstand montierbares Rückenlehnenteil vorgesehen. In seiner hochgeklappten Stellung liegt die Sitzfläche des Sitzteils an der Rückenfläche des Rückenlehnenteils an. Infolge der gleitenden Verschiebung und Verdrehung des Sitzteils beim Hochklappen wird dieses abgesenkt, so dass auch bei Verwendung eines bequemen Sitzteils, dass eine ausreichend lange Sitzfläche aufweist, die Vorderkante des Sitzteils im hochgeklappten Zustand nicht über die Oberkante der Rückenlehne hinausragt.

Die Führung lässt sich auf einfache Weise derart ausbilden, dass sie durch wenigstens eine erste Platte und eine zweite Platte gebildet wird. Bei den beiden Platten kann es sich um einfache, ebene oder abgewinkelte Stahlblechstreifen handeln.

Es können jedoch auch plattenförmige Elemente verwendet werden, die beispielsweise mit Versteifungselementen (Rippen) oder anderen Besonderheiten zur Erfüllung weiterer Funktionen ausgebildet sind. Ein erster Bereich der ersten Platte und ein erster Bereich der zweiten Platte sind im Wesentlichen eben ausgebildet und parallel übereinanderliegend angeordnet (Überlappungsbereiche). Diese beiden ersten Bereiche sind zueinander beabstandet, so dass sich ein Zwischenraum konstanter Breite ausbildet. Dieser Zwischenraum nimmt die Gleitlagervorrichtung wenigstens teilweise auf, so dass sich diese an den sich gegenüberstehenden Platten abstützen kann und zwischen den Platten geführt ist.

Vorzugsweise trägt die erste Platte das Rückenlehnenteil, indem es einen sich über den Überlappungsbereich hinausragenden Schenkel aufweist, der beispielsweise in das Rückenlehnenteil hineinragt und Befestigungsmöglichkeiten für das Rückenlehnenteil enthält.

Die beiden Platten sind in zweckmäßiger Weise unter Verwendung von Distanzmitteln, beispielsweise von Distanzhülsen, miteinander verbunden, z. B. verschraubt. Die so ausgebildete Einheit aus erster und zweiter Platte kann am Fahrzeugstand, vorzugsweise am Kotschützer eines Traktors befestigt werden. Für diese Befestigung können z. B. Schrauben, die der Verbindung zwischen der ersten und der zweiten Platte dienen, genutzt werden. Es ist auch möglich, eine feste Verbindung entweder zwischen der ersten oder der zweiten Platte einerseits und dem Fahrzeugstand andererseits herzustellen.

Gemäß einer bevorzugten Ausgestaltung der Erfindung kann die erste Platte als ebenes Bauteil ausgebildet sein, bei dem der Überlappungsbereich und ein sich hieran anschließender Schenkel in einer Ebene liegen. Dies hat zur Folge, dass die parallel zueinander angeordneten ersten Bereiche der beiden Platten im Wesentlichen die gleiche Ausrichtung einnehmen wie ein an dem Schenkel montiertes Rückenlehnenteil. Die beiden Platten können dabei auf einer Auflagefläche (Kotschützer) am Fahrzeugstand, insbesondere im Inneren einer Fahrzeugkabine, befestigt werden, welche bezüglich der Senkrechten geneigt ist. Im montierten Zustand nehmen die Platten somit eine gegenüber der Vertikalen geneigte Stellung ein und verlaufen von einem bezüglich der Fahrtrichtung des Fahrzeugs vorderen, unteren Bereich zu einem hinteren, oberen Bereich. Die Platten können dabei mit der Horizontalen einen Winkel von beispielsweise 60° bis 70° einschließen, so dass sich eine bequeme Rückenlehnenposition ergibt.

Eine weitere bevorzugte Ausgestaltung der Erfindung sieht vor, dass das Sitzteil an einer dritten Platte montiert ist. Wenigstens ein erster Bereich der dritten Platte liegt in Sitzstellung über den parallel zueinander angeordneten ersten Bereichen der ersten und der zweiten Platte und ist dabei im Wesentlichen parallel zu den Überlappungsbereichen der ersten und zweiten Platte ausgerichtet.

Vorzugsweise weist die dritte Platte einen ersten und einen zweiten Bereich auf, die zueinander einen Winkel einschließen. Dabei kann zwischen den beiden Bereichen eine Kante ausgebildet sein. Es ist hierbei zweckmäßig, dass der zweite Bereich der dritten Platte im Wesentlichen die gleiche Ausrichtung einnimmt wie das Sitzteil, und dass sich das Sitzteil an diesem zweiten Bereich befestigen lässt. Der Winkel zwischen den beiden Bereichen der dritten Platte kann beispielsweise Werte zwischen 110° und 120° einnehmen, was mit dem bereits erwähnten Neigungswinkel des Rückenlehnenteils und einem im Wesentlichen horizontal ausgerichteten Sitzteil korrespondiert.

Gemäß einer bevorzugten Weiterbildung der Erfindung ist die Gleitlagervorrichtung im Bereich der in Sitzstellung oberen Kante der dritten Platte befestigt. Sie weist vorzugsweise zwei Zapfenelemente auf, die bei montiertem Fahrzeugsitz horizontal ausgerichtet sind und die zweckmäßigerweise zylindrisch ausgebildet sind. Im Bereich jeder Seite der dritten Platte ist je ein Zapfenelement derart angeordnet, dass die freien Zapfenenden zueinander gerichtet sind und in die Führung eingreifen.

Zweckmäßigerweise weist auch die zweite Platte einen ersten und einen zweiten Bereich auf, die miteinander einen Winkel einschließen, so dass in Sitzstellung der zweite Bereich der zweiten Platte parallel zu dem zweiten Bereich der dritten Platte ausgerichtet ist und unterhalb des zweiten Bereichs der dritten Platte liegt. Damit sind in Sitzstellung diese beiden zweiten Bereiche im Wesentlichen parallel zueinander ausgerichtet. Der Winkel zwischen den beiden Bereichen der zweiten Platte kann beispielsweise ebenfalls Werte zwischen 110° und 120° einnehmen. In Sitzstellung ist der zweite Bereich der dritten Platte und mit ihr das Sitzteil im Wesentlichen horizontal ausgerichtet.

Eine besonders bevorzugte Ausgestaltung der Erfindung sieht vor, dass von der dritten Platte ein in Richtung der zweiten Platte weisendes Verriegelungselement vorsteht, welches in einen im zweiten Bereich der zweiten Platte ausgebildeten mittleren Längsschlitz eingreift. Wird eine dritte Platte verwendet, deren erster und zweiter Bereich zueinander einen Winkel einschließen, so ist das Verriegelungselement vorzugsweise im Knickbereich angeordnet und steht nach außen vor. Diese Maßnahme stellt sicher, dass eine seitliche Führung des Sitzteils beim Verschwenken gewährleistet ist.

Ergänzend hierzu ist es von besonderem Vorteil, wenn das Verriegelungselement einen Kopfbereich enthält, welcher aus der zweiten Platte vorsteht und dessen Abmessungen größer als die Breite des Längsschlitzes ist. Beim Verschwenken des Sitzteils wird dieses mit der dritten Platte und der Gleitlagervorrichtung entlang des in der zweiten Platte ausgebildeten Schlitzes zwangsgeführt. Beim Anheben des Sitzteils kann sich die dritte Platte daher nicht von der zweiten Platte entfernen, so dass die Gleitlagervorrichtung gezwungen wird, sich entlang der Führung nach unten zu bewegen. Dies unterstützt den gewünschten Bewegungsablauf, demzufolge beim Verschwenken des Sitzteils eine translatorische Höhenänderung seines hinteren Bereichs erfolgen soll.

Sobald die Gleitvorrichtung eine untere Endstellung in der Führung erreicht hat, sollte der Kopfbereich des Verrieglungselements freigegeben und nicht mehr von dem Längsschlitz zurückgehalten werden, so dass ein ungehindertes weiteres Hochschwenken des Sitzteils erfolgen kann. Hierfür ist es zweckmäßig, in dem Längsschlitz eine Erweiterung auszubilden, die ein Einführen und Herausziehen des Kopfbereichs ermöglicht. Die Lage der Erweiterung ergibt sich durch die Lage des Kopfbereiches, die dieser einnimmt, wenn die Gleitvorrichtung sich in ihrer unteren Endstellung befindet. Bei einer abgewinkelten zweiten Platte befindet sich die Erweiterung zweckmäßigerweise in einer hinsichtlich des Knickbereichs der zweiten Platte abgelegenen Position.

Vorzugsweise ist an dem unteren Ende der ersten Platte, das dem Rückenlehnenteil gegenüberliegt, ein mittlerer Schlitz vorgesehen, welcher der Aufnahme einer Nase dient, die am hinteren Ende der dritten Platte, welches sich hinter der Rückseite des Sitzteils befindet, ausgebildet ist. Wenn das Sitzteil vollständig hochgeklappt ist, greift die Nase in den Schlitz ein und bildet eine seitliche Arretierung des Sitzteils. Zweckmäßigerweise weist der Schlitz einen sich zum unteren Ende der Platte konisch öffnenden Abschnitt auf, so dass beim Hochklappen des Sitzteils die Nase leicht in den Schlitz einfädelbar ist.

Gemäß einer weiteren bevorzugten Ausgestaltung der Erfindung ist für ein komfortables Verschwenken des Sitzteils ein Betätigungshebel vorgesehen, der am Fahrzeugstand oder an Teilen der Führung um eine Schwenklagerachse verschwenkbar befestigt ist und der durch eine Feder gegen die Unterseite des Sitzteils gedrückt wird. Die Federkraft wird so bemessen, dass sie das Anheben des Sitzteils unterstützt, jedoch nicht ausreicht, um das Sitzteil selbsttätig anzuheben.

Es ist von Vorteil, am Betätigungshebel wenigstens eine drehbare Rolle anzubringen, die sich in einem zur Schwenklagerachse beabstandeten Bereich befindet und die beim Verschwenken des Sitzteils auf der Unterseite des Sitzteils abrollt. Dabei überträgt die Rolle die Federkraft auf das Sitzteil. Durch die Verwendung einer Rolle werden störende Reibkräfte zwischen Betätigungshebel und Sitzteil vermindert.

Vorzugsweise ist am freien Ende des Betätigungshebels ein Handgriff angeordnet, der es erlaubt den Betätigungshebel von dem Sitzteil wegzuschwenken.

Zur Verriegelung des Sitzteils in seiner vollständig aufgestellten Nichtgebrauchslage, ist es von besonderem Vorteil, wenn von dem Betätigungshebel eine zum Sitzteil gerichtete Lasche vorsteht. An der Unterseite des Sitzteils bzw. an der dritten Platte ist ein Zapfen befestigt. Sofern das Sitzteil in seine vollständig aufgerichtete Stellung geschwenkt ist, greift die Lasche seitlich an dem Zapfen an und verhindert ein selbstständiges Herunterklappen des Sitzteils, beispielsweise infolge der beim Abbremsen des Fahrzeugs auftretenden Trägheitskräfte. Die Verriegelung zwischen Lasche und Zapfen kann durch Handbetätigung des Betätigungshebels gelöst werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Seitenansicht eines erfindungsgemäßen klappbaren Fahrzeugsitzes in heruntergeklappter Sitzstellung,
- Fig. 2: die Seitenansicht eines Fahrzeugsitzes gemäß Fig. 1 in halb angehobener Stellung,
- Fig. 3: die perspektivische Ansicht eines Fahrzeugsitzes gemäß Fig. 1 in vollständig hochgeklappter Stellung,
- Fig. 4: ein Rückenlehnenteil mit einer daran befestigten ersten Platte,
- Fig. 5: die perspektivische Ansicht einer zweiten Platte und
- Fig. 6: die perspektivische Ansicht einer dritten Platte.

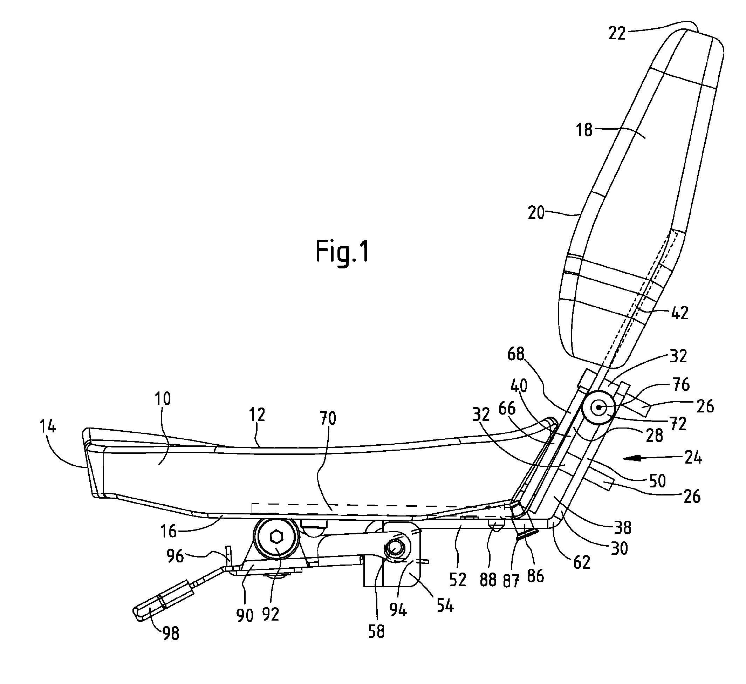

Aus den Figuren 1 bis 3 geht ein klappbarer Fahrzeugsitz hervor, der beispielsweise bei einem landwirtschaftlichen Arbeitsfahrzeug wie einem Ackerschlepper neben dem Fahrersitz angeordnet wird und als Beifahrersitz dient. Der Fahrzeugsitz enthält ein Sitzteil 10 mit einer Sitzfläche 12, einer Vorderkante 14 und einer Unterseite 16 sowie ein Rückenlehnenteil 18 mit einer Rückenfläche 20 und einer Oberkante 22.

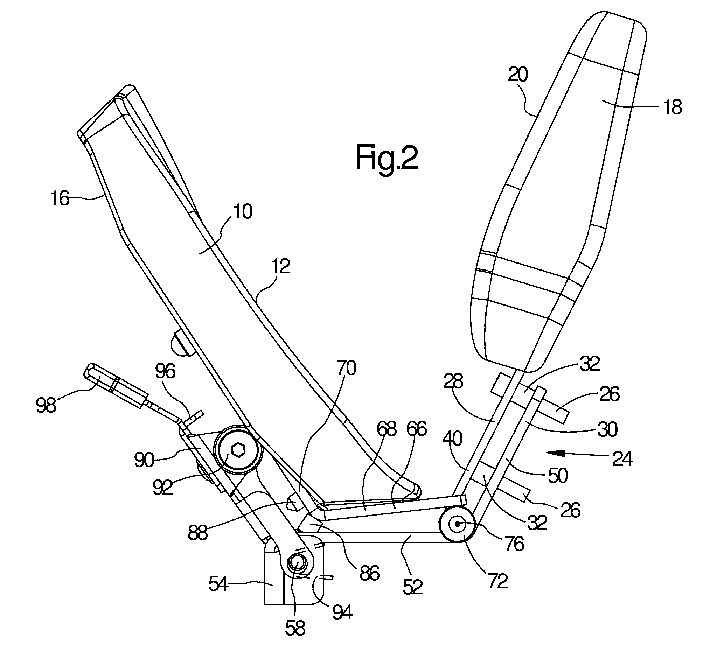

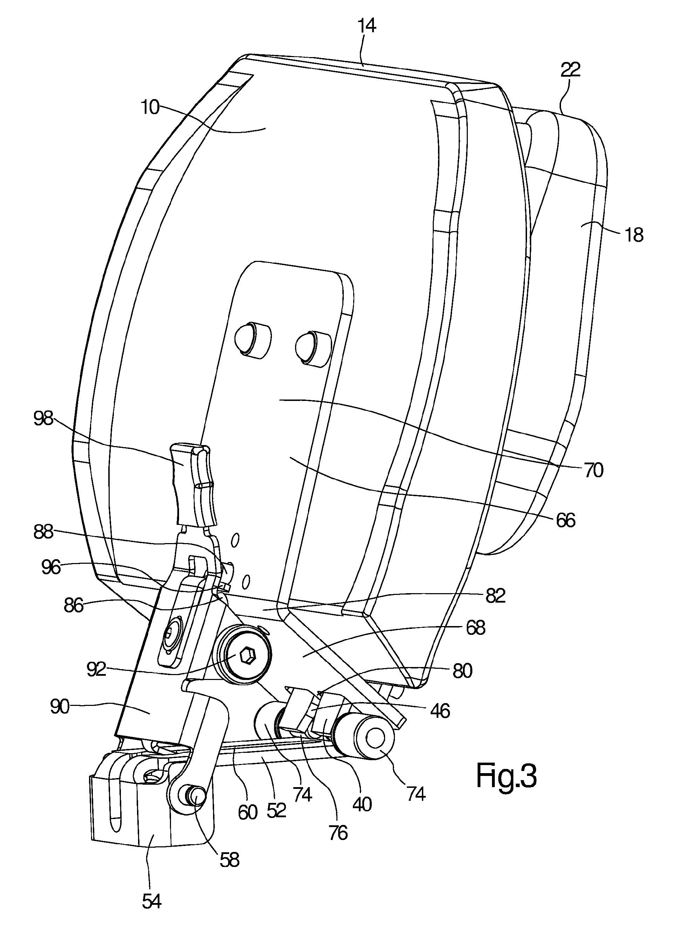

Das Rückenlehnenteil 18 ist an einer Führung 24 starr befestigt, welche ihrerseits mittels Schrauben 26 starr an einer nicht näher dargestellten Konsole in einer Fahrzeugkabine, vorzugsweise am Kotschützer, befestigt ist. Die Konsole verläuft nicht senkrecht, sondern schließt mit der Senkrechten einen Winkel von ca. 65° ein, so dass auch die Führung 24 im montierten Zustand diese Ausrichtung aufweist. Das Sitzteil 10 ist in Fig. 1 in seiner heruntergeklappten Sitzstellung, in Fig. 2 in einer mittleren Stellung und in Fig. 3 in einer hochgeklappten Nichtgebrauchsstellung dargestellt.

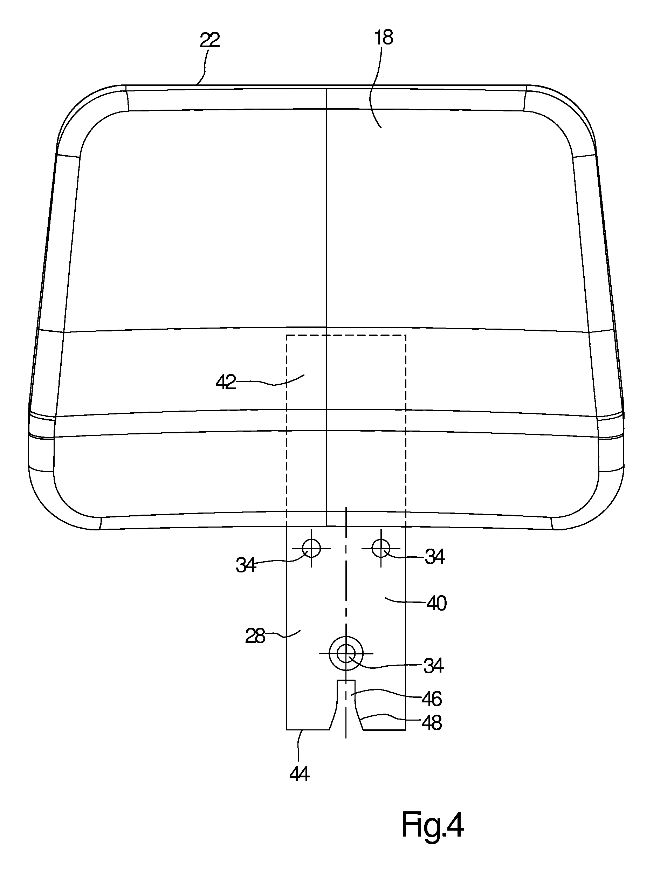

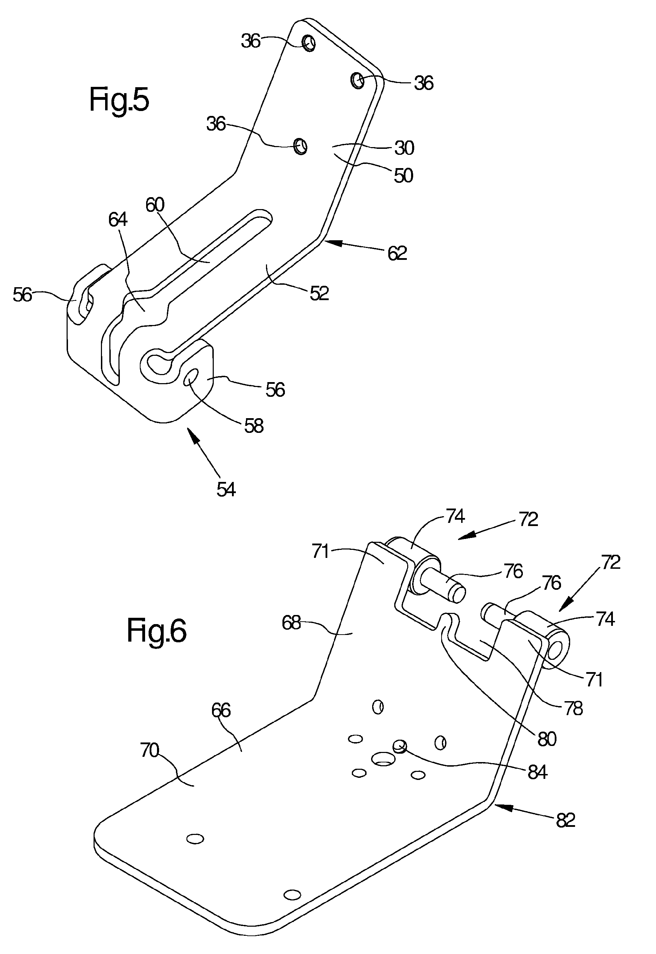

Die Führung 24 wird im Wesentlichen durch eine erste Platte 28, eine zweite Platte 30 und Verbindungsmitteln in Form von Schrauben 26 und Distanzhülsen 32, die zwischen den beiden Platten 28, 30 angeordnet sind und durch die sich die Schrauben 26 erstrecken, gebildet. Die Schrauben 26 verlaufen durch Bohrungen 34, 36 der ersten Platte 28 und der zweiten Platte 30, die in den Figuren 4 und 5 dargestellt sind. Die Distanzhülsen 34 halten die beiden Platten 28, 30 auf Abstand, so dass zwischen den Platten 28, 30 ein Zwischenraum 38 konstanter Breite ausgebildet ist.

Die erste Platte 28 enthält einen ersten, der Führung 24 zugeordneten Bereich 40 und einen daran angeformten Schenkel 42, der sich in das innere des Rückenlehnenteils 18 erstreckt und der Befestigung des Rückenlehnenteils 18 dient. Die erste Platte 28 ist ein im Wesentlichen ebenes Blechteil. Sie enthält an ihrem unteren Ende 44 einen mittleren Schlitz 46, der einen sich zur Plattenkante konisch öffnenden Abschnitt 48 aufweist.

Die zweite Platte 30 enthält einen ersten, der Führung 24 zugeordneten ebenen Bereich 50 und einen zweiten sich an den ersten Bereich 50 anschließenden ebenen Bereich 52. Die zweite Platte 30 ist abgewinkelt, so dass ihre beiden Bereiche 50, 52 einen Winkel von ungefähr 115° einschließen. An den zweiten Bereich 52 schließt sich eine Lageraufnahme 54 mit zwei gegenüberliegenden Laschen 56 an, wobei sich durch die Laschen 56 Bohrungen 58 erstrecken, die eine Schwenklagerachse definieren. In der zweiten Platte 30 verläuft ein Längsschlitz 60, der sich ausgehend von der Knickkante 62 zwischen dem ersten Bereich 50 und dem zweiten Bereich 52 längs des zweiten Bereichs 52 bis in die Lageraufnahme 54 erstreckt. Mit Ausnahme einer Erweiterung 64 weist der Längsschlitz 60 eine konstante Breite auf. Die Erweiterung 64 befindet sich im zweiten Bereich 52 fernab von der Knickkante 62 und nahe der Lageraufnahme 54. Die zweite Platte 30 lässt sich aus einem entsprechend zugeschnittenen Blechteil, durch Biegen fertigen.

Es ist eine in Fig. 6 näher dargestellte dritte Platte 66 vorgesehen, welche einen ersten ebenen Bereich 68 und einen zweiten ebenen Bereich 70 aufweist. Auch die dritte Platte 66 ist abgewinkelt, wobei ihre beiden Bereiche 68, 70 einen Winkel von ungefähr 115° einschließen. Am freien Ende 71 des ersten Bereichs 68 ist eine Gleitlagervorrichtung befestigt. Die Gleitlagervorrichtung besteht aus zwei zylindrischen Lagerelementen 72, die jeweils einen Abschnitt 74 großen Durchmessers und einen Zapfen 76 kleinen Durchmessers aufweisen. Die Querschnitte der Zapfen 76 sind an die Breite des Zwischenraums 38 zwischen der ersten und der zweiten Platte 28, 30 angepasst und lassen sich in dem Zwischenraum 38 verschieben und verdrehen. Die beiden Lagerelemente 72 sind jeweils mit ihrem Abschnitt 74 seitlich am freien Ende 71 des ersten Bereichs 68, beispielsweise durch Schweißen, derart befestigt, dass die beiden Zapfen 76 einander zugewandt sind und eine Achse bilden. In der Mitte des freien Endes 71 des ersten Bereichs 68 der dritten Platte 66 befindet sich eine Ausbuchtung 78 innerhalb der eine Nase 80 vorsteht.

In der Mitte der zwischen den beiden Bereichen 68, 70 der Platte 66 ausgebildeten Knickkante 82 befindet sich eine Bohrung 84, die ein bolzenförmiges Verriegelungselement 86 aufnimmt, welches nach Außen weist und daher in Fig. 6 nicht sichtbar ist. Das Verriegelungselement 86 enthält einen Schaft und einen Kopfbereich 87. Der Schaft des Verriegelungselements 86 ist so bemessen, dass er innerhalb des Längsschlitzes 60 der zweiten Platte 30 verschiebbar gleiten kann. Der Durchmesser des Kopfbereichs 87 ist jedoch größer als die Breite des Längsschlitzes 60. Er kann nur im Bereich der Erweiterung 64 des Schlitzes 60 in den Schlitz 60 eingeführt und aus diesem heraus gezogen werden.

An dem zweiten Bereich 70 der dritten Platte 66 lässt sich das Sitzteil 10 beispielsweise durch Schrauben starr montieren. Von der Unterseite 16 des Sitzteils 10 oder von der dritten Platte steht in der Nähe des Verriegelungselements 86 ein Zapfen 88 vor, dessen Bedeutung später erläutert werden wird.

Die dritte Platte 66 lässt sich gemeinsam mit dem Sitzteil 10 in die Führung 24 einhängen, indem die Zapfen 76 der Lagerelemente 72 in den Zwischenraum 38 der die Führung 24 bildenden ersten und zweiten Platte 28, 30 gebracht werden und der Kopfbereich 87 des Verriegelungselements 86 durch die Erweiterung 64 des Längsschlitzes 60 der zweiten Platte 30 gesteckt wird. Die Lagerelemente 72 lassen sich nun innerhalb der Führung zwischen einer oberen Endstellung und einer unteren Endstellung verschieben. Befindet sich das Sitzteil 10 in seiner in Fig. 1 dargestellten Sitzposition, nehmen die Lagerelemente 72 eine obere Stellung ein. Wird das Sitzteil 10 aus dieser Stellung hochgeklappt, so dass seine Vorderkante 14 angehoben wird, so sorgt der Kopfbereich 87 des in dem Längsschlitz 60 geführten Verriegelungselements 86 dafür, dass die dritte Platte 66 nicht von der zweiten Platte 30 weggeschwenkt werden kann. Vielmehr ist lediglich eine Relativverschiebung längs des Längsschlitzes 60 möglich. Gleichzeitig wandern die Lagerelemente 72 in der Führung 24 nach unten bis sie ihre untere Endstellung einnehmen, wie es die Fig. 2 zeigt. In der unteren Endstellung erreicht das Verriegelungselement 86 die Erweiterung 64 des Längsschlitzes 60, so dass der Kopfbereich 87 des Verriegelungselements 86 aus dem Schlitz austreten kann. Bei einem weiteren Anheben des Sitzteils 10 wird diese mit der dritten Platte 66 um die Achse der Lagerelemente 72 verschwenkt bis die Sitzfläche 12 an der Rückenfläche 20 zur Anlage kommt. Bei dieser Bewegung hat sich das Sitzteil 10 soweit abgesenkt, dass seine Vorderkante 14 nicht nach oben über die Oberkante 22 des Rückenlehnenteils 18 hinausragt (Fig. 3).

In der Endphase beim Hochklappen des Sitzteils bewegt sich die Nase 80 der dritten Platte 66 in den Schlitz 46 der ersten Platte 28. Das Einführen wird durch die konische Ausbildung des Schlitzes 46 erleichtert. Damit ergibt sich eine seitliche Festlegung des hinteren Bereichs (der in der hochgeklappten Stellung zum unteren Bereich wird) des Sitzteils 10, so dass in der hochgeklappten Stellung eine stabile Lagefixierung des Sitzteils 10 gegeben ist.

Um das Hochklappen des Sitzteils 10 zu unterstützen ist ein Betätigungshebel 90 an der Schwenklagerachse 58 angelenkt. Der Betätigungshebel 90 trägt in seinem mittleren Bereich zwei seitlich angeordnete Rollen 92 und wird durch eine Feder 94 in Richtung Unterseite 16 des Sitzteils 10 gedrängt, so dass beim Verschwenken des Sitzteils 10 die Rollen 92 auf der Unterseite 16 abrollen und die Federkraft auf das Sitzteil 10 übertragen. An dem Betätigungshebel 90 ist eine zum Sitzteil 10 weisende Lasche 96 angeordnet. Sofern das Sitzteil 10 vollständig hochgeklappt ist (Fig. 3), greift die Lasche 96 von der Unterseite aus seitlich an dem am Sitzteil 10 oder an der dritten Platte 66 befestigten Zapfen 88 an. Sollte durch Trägheitskräfte oder durch Zug an der Vorderkante 14 des Sitzteils 10 eine Kraft zum Herunterklappen des Sitzteils 10 aufgebracht werden, so wird der Zapfen 88 gegen die Lasche 96 gedrückt und verhindert eine Klappbewegung. Erst wenn die Bedienungsperson mittels eines am Betätigungshebel 90 befestigten Handgriffs 98 den Betätigungshebel 90 von der Unterseite 16 des Sitzteils 10 wegschwenkt, löst sich der Verriegelungseingriff zwischen Lasche 96 und Zapfen 88 und erlaubt ein Herunterklappen des Sitzteils 10.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Fahrzeugsitz, insbesondere Beifahrerklappsitz für landwirtschaftlich oder industriell nutzbare Fahrzeuge, mit einem Sitzteil (10), welches aus einer Sitzstellung (Fig. 1) in eine hochgeklappte Stellung (Fig. 3) verschwenkbar ist, **dadurch gekennzeichnet, dass** im hinteren Bereich des Sitzteils (10) eine Gleitlagervorrichtung (72) vorgesehen ist, welche in einer am Fahrzeugstand montierbaren Führung (24) verschiebbar geführt und um eine Achse (76) der Gleitlagervorrichtung (72) verschwenkbar gelagert ist, derart, dass beim Hochklappen des Sitzteils (10) die Gleitlagervorrichtung (72) aus einer oberen Position entlang der Führung (24) nach unten gleitet und sich gleichzeitig relativ zur Führung (24) verdreht.

2. Fahrzeugsitz nach Anspruch 1, **dadurch gekennzeichnet, dass** ein am Fahrzeugstand montierbares Rückenlehnenteil (18) vorgesehen ist und dass das Sitzteil (10) in seiner hochgeklappten Stellung an dem Rückenlehnenteil (18) anliegt.

3. Fahrzeugsitz nach Anspruch 1 oder 2, **dadurch gekennzeichnet, dass** die Führung (24) durch wenigstens eine erste Platte (28) und eine zweite Platte (30) gebildet wird, wobei ein erster Bereich (40) der ersten Platte (28) und ein erster Bereich (50) der zweiten Platte (30) parallel übereinanderliegend angeordnet sind und wobei die ersten Bereiche (40, 50) der Platten (28, 30) zueinander beabstandet sind, so dass sich ein Zwischenraum (38) konstanter Breite ausbildet, welcher die Gleitlagervorrichtung (72) wenigstens teilweise aufnimmt.

4. Fahrzeugsitz nach einem der vorhergehenden Ansprüche, **dadurch gekennzeichnet, dass** die Führung (24) wenigstens eine erste Platte (28) und eine zweite Platte (30) enthält, dass die erste Platte (28) ein Rückenlehnenteil (18) trägt, dass die erste Platte (28) und die zweite Platte (30) unter Verwendung von Distanzmitteln (32) miteinander verbunden sind, und dass die erste Platte (28) und/oder die zweite Platte (30) mit dem Fahrzeugstand verbindbar sind bzw. ist.

5. Fahrzeugsitz nach Anspruch 3 oder 4, **dadurch gekennzeichnet, dass** parallel zueinander angeordnete erste Bereiche (40, 50) der ersten Platte (28) und der zweiten Platte (30) im Wesentlichen die gleiche Ausrichtung einnehmen wie ein Rückenlehnenteil (18).

6. Fahrzeugsitz nach einem der Ansprüche 3 bis 5, **dadurch gekennzeichnet, dass** das Sitzteil (10) an einer dritten Platte (66) montiert ist und dass wenigstens ein erster Bereich (68) der dritten Platte (66) in Sitzstellung über den parallel zueinander angeordneten ersten Bereichen (40, 50) der ersten und der zweiten Platte (28, 30) liegt und im Wesentlichen parallel zu diesen ausgerichtet ist.

7. Fahrzeugsitz nach Anspruch 6, **dadurch gekennzeichnet, dass** die dritte Platte (66) einen zweiten Bereich (70) aufweist, der mit dem ersten Bereich (68) der dritten Platte (66) einen Winkel einschließt.

8. Fahrzeugsitz nach Anspruch 7, **dadurch gekennzeichnet, dass** der zweite Bereich (70) der dritten Platte (66) im Wesentlichen die gleiche Ausrichtung einnimmt wie das Sitzteil (10).

9. Fahrzeugsitz nach einem der Ansprüche 6 bis 8, **dadurch gekennzeichnet, dass** die Gleitlagervorrichtung (72) im Bereich des in Sitzstellung oberen Endes (71) der dritten Platte (66) befestigt ist.

10. Fahrzeugsitz nach einem der vorhergehenden Ansprüche, **dadurch gekennzeichnet, dass** die Gleitlagervorrichtung (72) zwei in montierter Stellung des Fahrzeugsitzes horizontal ausgerichtete Zapfenelemente (76) aufweist, die jeweils an einer Seite einer das Sitzteil (10) haltenden dritten Platte (66) derart angeordnet sind, dass die freien Zapfenenden zueinander gerichtet sind und in die Führung (24) eingreifen.

11. Fahrzeugsitz nach einem der Ansprüche 7 bis 10, **dadurch gekennzeichnet, dass** die zweite Platte (30) einen zweiten Bereich (52) aufweist, der mit ihrem ersten Bereich (50) einen Winkel einschließt, so dass in Sitzstellung der zweite Bereich (70) der dritten Platte (66) über dem zweiten Bereich (52) der zweiten Platte (30) liegt und beide Bereiche (52, 70) im Wesentlichen parallel zueinander ausgerichtet sind.

12. Fahrzeugsitz nach einem der Ansprüche 7 bis 11, **dadurch gekennzeichnet, dass** von der dritten Platte (66) ein in Richtung der zweiten Platte (30) weisendes Verriegelungselement (86) vorsteht, welches in einen im zweiten Bereich (52) der zweiten Platte (30) ausgebildeten mittleren Längsschlitz (60) eingreift.

13. Fahrzeugsitz nach Anspruch 12, **dadurch gekennzeichnet, dass** das Verriegelungselement (86) einen Kopfbereich (87) enthält, der aus der zweite Platte (30) vorsteht und dessen Abmessungen größer als die Breite des Längsschlitzes (60) ist.

14. Fahrzeugsitz nach Anspruch 13, **dadurch gekennzeichnet, dass** in dem Längsschlitz (60) eine Erweiterung (64) ausgebildet ist, die ein Einführen und Herausziehen des Kopfbereichs (87) des Verriegelungselements (86) ermöglicht.

15. Fahrzeugsitz nach Anspruch 14, **dadurch gekennzeichnet, dass** sich die Erweiterung (64) in einer hinsichtlich des Knickbereichs (62), der zwischen dem ersten und dem zweiten Bereich (50, 52) der zweiten Platte (30) ausgebildet ist, abgelegenen Position befindet.

16. Fahrzeugsitz nach einem der Ansprüche 6 bis 15, **dadurch gekennzeichnet, dass** am zum Rückenlehnenteil (18) gegenüberliegenden Ende (44) der ersten Platte (28) ein mittlerer Schlitz (46) verläuft, welcher der Aufnahme einer Nase (80) dient, die am hinsichtlich des Sitzteils (10) abgelegenen Ende (71) der dritten Platte (66) ausgebildet ist.

17. Fahrzeugsitz nach Anspruch 16, **dadurch gekennzeichnet, dass** der Schlitz (46) einen sich zur Plattenkante (44) konisch öffnenden Abschnitt (48) aufweist.

18. Fahrzeugsitz nach einem der vorhergehenden Ansprüche, **dadurch gekennzeichnet, dass** ein am Fahrzeugstand oder an Teilen der Führung (24) befestigbarer, um eine Schwenklagerachse (58) verschwenkbarer Betätigungshebel (90) vorgesehen ist, der durch eine Feder (94) gegen die Unterseite (16) des Sitzteils (10) gedrückt wird.

19. Fahrzeugsitz nach Anspruch 18, **dadurch gekennzeichnet, dass** in einem zur Schwenklagerachse (58) beabstandeten Bereich am Betätigungshebel (90) wenigstens eine drehbare Rolle (92) montiert ist, die beim Verschwenken des Sitzteils (10) auf der Unterseite (16) des Sitzteils (10) abrollt.

20. Fahrzeugsitz nach Anspruch 18 oder 19, **dadurch gekennzeichnet, dass** am freien Ende des Betätigungshebels (90) ein Handgriff (98) angeordnet ist.

21. Fahrzeugsitz nach einem der Ansprüche 18 bis 20, **dadurch gekennzeichnet, dass** vom Betätigungshebel (90) eine zum Sitzteil (10) gerichtete Lasche (96) vorsteht, welche an einen auf der Unterseite (16) des Sitzteils (10) bzw. auf der dritten Platte (66) befestigten Zapfen (88) angreift, sofern das Sitzteil (10) seine vollständig aufgerichtete Stellung einnimmt.
